# EUROPEAN PATENT APPLICATION

(11) **EP 1 589 328 A1**
(43) Date of publication of application: **26.10.2005**
(21) Application number: 04702801.4
(22) Date of filing: 16.01.2004
(51) Int. Cl.: G01L 5/00, F16D 66/00

(54) **HUB UNIT WITH SENSOR**

(30) Priority: 16.01.2003 JP 2003007810
(71) Applicant: Koyo Seiko Co., Ltd., Osaka 542-0081 (JP)
(72) Inventor: INOUE, Masahiro, KOYO SEIKO CO., LTD., Chuo-ku, Osaka-shi Osaka 5420081 (JP); KOYAGI, Katsura, KOYO SEIKO CO., LTD., Osaka-shi Osaka 5420081 (JP)
(74) Representative: Steinmeister, Helmut
(86) International application number: PCT/JP2004/000287
(87) International publication number: WO 2004/063692

(57) **Abstract**

A brake caliper 12 is fastened to a fixed-side raceway member 3 of a hub unit 1 as an assembly. The fixed-side raceway member 3 has a caliper mount 10 extending radially outwardly thereof and having the brake caliper 12 attached thereto. A sensor device 2 has strain gauges 2a serving as a brake torque sensor and provided on the fixed-side raceway member 3. The strain gauges 2a are provided at the base end 10a of the caliper mount 10 of the fixed-side raceway member 3.

## Description

### TECHNICAL FIELD

The present invention relates to sensor-equipped hub units comprising a hub unit serving as a component of a motor vehicle and a sensor device joined to the hub unit for detecting various items of data as to the motor vehicle, and more particularly to a sensor-equipped hub units which are adapted to obtain brake torque data corresponding to the brake torque acting between the wheel of a vehicle and the brake device thereof.

### BACKGROUND ART

Since various items of data are required for controlling motor vehicles, it has been proposed to provide a sensor on a hub unit comprising a rotation-side raceway member to which a wheel is to be attached, a fixed-side raceway member to be fixed to the vehicle body, and two rows of rolling bodies arranged between the two raceway members.

For example, the publication of JP-A No. 11-115722 discloses an arrangement for obtaining brake torque data corresponding to the brake torque acting between the wheel of a vehicle and the brake device thereof and using the data obtained for an ABS device.

The publication of JP-A No. 2001-304309 discloses a wheel support structure wherein a brake caliper attached to a hub wheel for controlling the rotation of a disk rotor and a mount flange formed on a fixed-side raceway member of a hub unit for rotatably supporting the hub wheel are attached to the body of a vehicle by a knuckle serving as a support member.

Accordingly, it appears useful to mount the brake torque sensor disclosed in the first of the above publications for obtaining the brake torque data on the hub unit disclosed in the second publication. However, when a strain sensor or like brake torque sensor is attached to the caliper of the wheel support structure of the second publication, the error involved in the data obtained relative to the actual brake toque is great because the brake caliper is attached to the knuckle (vehicle body side). Thus, the combination of the brake torque sensor with the wheel support structure has the problem of failing to accurately detect brake torque values.

An object of the present invention is to provide a sensor-equipped hub unit which is adapted to detect brake torque values with high accuracy.

### DISCLOSURE OF THE INVENTION

The present invention provides a sensor-equipped hub unit comprising a hub unit having a rotation-side raceway member for a wheel to be attached thereto, a fixed-side raceway member to be fixed to a vehicle body and rolling bodies arranged between the two raceway members, and a sensor device provided on the hub unit, the sensor-equipped hub unit being characterized in that a brake caliper is fastened to the fixed-side raceway member of the hub unit as an assembly, the sensor device having a brake torque sensor provided on the fixed-side raceway member.

The expression "a brake caliper is fastened to the fixed-side raceway member of the hub unit as an assembly" means that the brake caliper is fastened to the fixed-side raceway member (including a member fixed to this member) of the hub unit by screw-thread connecting means or other means instead of being attached to the vehicle body by a knuckle and without being dependent on the vehicle body side.

With the sensor-equipped hub unit of the present invention, the brake caliper is fastened to the fixed-side raceway member of the hub unit as an assembly, and the sensor device has a brake torque sensor provided on the fixed-side raceway member. Accordingly, a value corresponding to brake torque can be detected at a location close to the wheel side to afford brake torque data with high accuracy. The brake torque value thus obtained is compared, for example, with a predetermined torque value, and when the torque value obtained during driving is below the predetermined value, this is interpreted as indicating that the brake is locked. The brake can then be loosened for control.

Preferably, the fixed-side raceway member has a caliper mount extending radially outwardly thereof and having the brake caliper attached thereto, and the brake torque sensor is provided at a base end of the caliper mount.

The caliper mount may be a caliper mount arm integral with the fixed-side raceway member, or may comprise a caliper mount member fixed to the fixed-side raceway member as with a bolt. In fastening the brake caliper to the caliper mount, the caliper mount may be caused to support the caliper directly thereon, or a member supporting the caliper may be fastened to the caliper mount with a screw. When brake torque acts on the brake caliper, the caliper mount deforms relative to the fixed-side raceway member which is in the form of a hollow cylinder, with the result that the radially outer end (free end) of the caliper mount deforms to the greatest extent, with a maximum internal strain produced on the base end of the mount serving as the fixed end. The brake torque can then be determined from the stress resulting from this strain, with the influence of error diminished. The use of the caliper mount makes it easy to fasten the brake caliper to the fixed-side raceway member of the hub unit, serving to simplify the sensor-equipped hub unit in construction.

Examples of brake torque sensors usable are strain sensors such as those of the electric resistance type, magnetostrictive sensors, piezoelectric sensors (torque sensors), capacitance-type sensors (torque sensors), etc., among which electric resistance strain sensors are desirable. With the brake caliper fastened to the fixed-side raceway member of the hub unit as an assembly, the strain sensor used as the brake torque sensor, although simple, affords brake torque data with high accuracy. This simplifies the sensor-equipped hub unit.

### BRIEF DESCRIPTION OF THE DRAWINGS

FIG. 1 is a view in vertical section showing an embodiment of sensor-equipped hub unit of the invention.
FIG. 2 is a view in vertical section showing another embodiment of sensor-equipped hub unit of the invention.
FIG. 3 includes a view in vertical section showing another embodiment of sensor-equipped hub unit of the invention, and a right side elevation of the same.

### BEST MODE OF CARRYING OUT THE INVENTION

Embodiments of the invention will be described below with reference to the drawings.

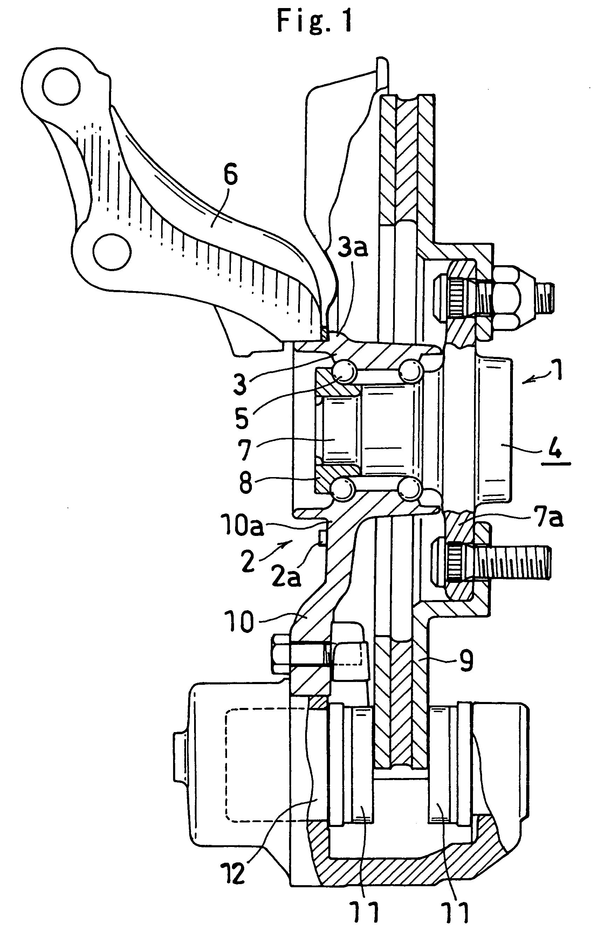

FIG. 1 shows an embodiment of sensor-equipped hub unit of the invention. In the following description, the terms "left," "right," "upper" and "lower" refer respectively to the left- and right-hand sides, and the upper and lower sides of the drawings. The left-hand side of the drawings is the inside of a vehicle, and the right-hand side thereof is the outside of the vehicle.

The sensor-equipped hub unit comprises a hub unit 1 of the caliper type, and a sensor device 2 provided on the unit.

The hub unit 1 comprises a fixed-side raceway member 3 to be fixed to the body of the vehicle, a rotation-side member 4 to which a wheel is to be attached, and balls 5 serving as rolling members and arranged in two rows between the two members 3, 4.

The fixed-side raceway member 3 is in the form of a hollow cylinder and is fixed to a knuckle arm 6 (body side) by a knuckle attaching flange 3a formed on the member 3 in the vicinity of the left end thereof. The rotation-side raceway member 4 has a stepped shaft 7 and a ring 8 fixedly fitted around a small-diameter portion at the left end of the shaft 7. The shaft 7 has a right end projecting rightward beyond the right end of the fixed-side raceway member 3 and has a flange 7a close to the right end of the shaft 7 and formed integrally therewith. A disk rotor 9 is fixed to the flange 7a with bolts and nuts. The fixed-side raceway member 3 is provided at a lower portion thereof close to its left end with a caliper mount arm (caliper mount) 10 extending from the knuckle attaching flange 3a radially outwardly thereof and integral therewith. Mounted on this arm 10 is a brake caliper 12 for clamping the outer peripheral portion of the disk rotor 9 to control the amount of movement of brake pads 11 and arrest the rotation of the disk rotor 9. Thus, all the brake caliper 12, brake pads 11 and disk rotor 9 for braking are attached to one of the fixed-side raceway member 3 and rotation-side raceway member 4.

The sensor device 2 has a plurality of strain gauges 2a of the electric resistance type serving as a brake torque sensor. The strain gauges 2a are affixed to the base end of the caliper mount arm 10 of the fixed-side raceway member 3 with an adhesive. The base end may be given a curved surface for affixing the strain gauges 2a thereto.

When the vehicle is braked, a reaction force of the brake torque acts on the brake caliper 12 and is measured by the strain gauges 2a on the fixed-side raceway member 3 of the sensor-equipped hub unit 1, whereby the brake torque can be detected accurately.

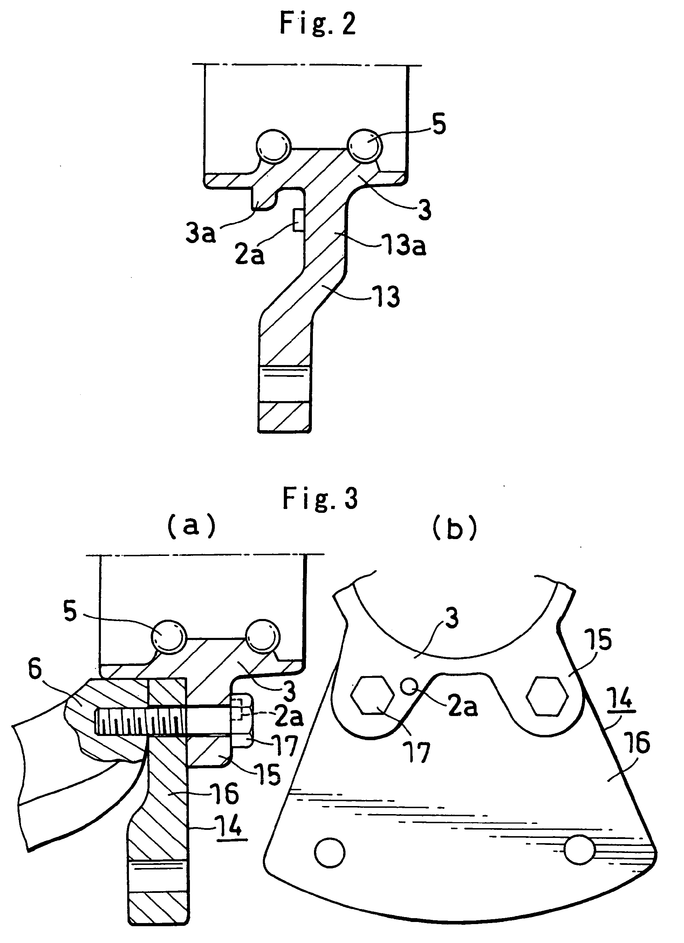

According to the embodiment described above, the knuckle attaching flange 3a and the caliper mount arm 10 are provided on the fixed-side raceway member 3 integrally therewith at the same position with respect to the axial direction thereof, whereas a caliper mount arm 13 may be provided on the fixed-side raceway member 3 integrally therewith at a position different from that of the knuckle attaching flange 3a (axially inwardly of the flange 3a) as shown in FIG. 2. In this case, the strain gauges 2a are affixed to the base end of the arm 13 with an adhesive.

Although the caliper mount arms 10, 13 serving as caliper mounts are provided on the fixed-side raceway member 3 integrally therewith each as a single component in the case of the above embodiments, the caliper mount arm 10 or 13 need not always be integral with the fixed-side raceway member 3 as the same single component. For example, FIG. 3 (a) and FIG. 3(b) show a caliper mount 14 which comprises a flange 15 integral with the fixed-side raceway member 3, and a caliper mount member 16 separate from the flange 15 and fixed to the flange 15 with bolts 17. In this case, the strain gauges 2a are affixed to the flange 15 corresponding to the base end of the caliper mount 14. The knuckle arm 6 is fixed to the flange 16 of the fixed-side raceway member 3 with the same bolts 17 as the caliper mount member 16. This permits the flange 15 of the member 3 to serve also as a knuckle attaching flange to reduce the number of bolts to be used and to reduce the number of work steps needed for mounting the hub unit 1 on the vehicle body.

### INDUSTRIAL APPLICABILITY

The invention provides a sensor-equipped hub unit which comprises a hub unit serving as a component of a motor vehicle and a sensor device joined to the hub unit for detecting various items of data as to the motor vehicle and which is adapted to obtain with high accuracy brake torque data corresponding to the brake torque acting between the wheel of a vehicle and the brake device thereof. The hub unit contributes to an improvement in the controllability of motor vehicles.

## Claims

1. A sensor-equipped hub unit comprising a hub unit having a rotation-side raceway member for a wheel to be attached thereto, a fixed-side raceway member to be fixed to a vehicle body and rolling bodies arranged between the two raceway members, and a sensor device provided on the hub unit,
the sensor-equipped hub unit being **characterized in that** a brake caliper is fastened to the fixed-side raceway member of the hub unit as an assembly, the sensor device having a brake torque sensor provided on the fixed-side raceway member.

2. A sensor-equipped hub unit according to claim 1 wherein the fixed-side raceway member has a caliper mount extending radially outwardly thereof and having the brake caliper attached thereto, and the brake torque sensor is provided at a base end of the caliper mount.

3. A sensor-equipped hub unit according to claim 2 wherein the brake torque sensor comprises a strain gauge.

4. A sensor-equipped hub unit according to claim 1 wherein the fixed-side raceway member is fixed to a knuckle arm on the vehicle body by a knuckle attaching flange provided on the fixed-side raceway member.

5. A sensor-equipped hub unit according to claim 4 wherein the caliper mount is a caliper mount arm integral with the fixed-side raceway member, and the brake caliper is attached to the arm.

6. A sensor-equipped hub unit according to claim 5 wherein the caliper mount arm is provided at the same position as the knuckle attaching flange with respect to the axial direction of the fixed-side raceway member.

7. A sensor-equipped hub unit according to claim 5 wherein the caliper mount arm is provided at a position different from that of the knuckle attaching flange with respect to the axial direction of the fixed-side raceway member.

8. A sensor-equipped hub unit according to claim 3 wherein the caliper mount comprises a flange integral with the fixed-side raceway member and a caliper mount member separate from the flange and fixed to the flange with a bolt, and the strain gauge is affixed to the flange of the fixed-side raceway member.

9. A sensor-equipped hub unit according to claim 8 wherein the fixed-side raceway member is fixed to a knuckle arm on the vehicle body by a knuckle attaching flange provided on the fixed-side raceway member, and the knuckle arm is fixed to the flange of the fixed-side raceway member with the same bolt as the caliper mount member.
